# EUROPEAN PATENT APPLICATION

(11) **EP 1 755 284 A1**
(43) Date of publication of application: **21.02.2007**
(21) Application number: 05018094.2
(22) Date of filing: 19.08.2005
(51) Int. Cl.: H04L 12/413, H04L 12/56, H04L 12/28

(54) **Method, apparatus and network for wireless packet oriented transmission of data**

(71) Applicant: SIEMENS AKTIENGESELLSCHAFT, 80333 München (DE)
(72) Inventor: Galarreta, Rafael Gonzalez, 80333 München (DE); Kutschenreuter, Matthias, 80809 München (DE); Ramirez, Alejandro, 80799 München (DE)

(57) **Abstract**

In a wireless network (N) the priority for network nodes (D1...5,G) is set for each node (D1...5,G) independently in accordance with occurring packet loss ratios. In this way nodes (D1...5,G) with heavy traffic loads due to forwarding activity get a higher chance for medium access, thus enabling a better quality of service in the network (N) as a whole.

## Description

The present invention relates to a method for wireless packet oriented transmission of data according to the preamble of claim 1, an apparatus for wireless packet oriented transmission of data according to the preamble of claim 12 and a network for wireless packet oriented transmission of data according to the preamble of claim 15.

Today the convergence of telecommunications and network services is an important technology area. One aspect of this area is the transmission of voice data over network communication links. This is commonly called Voice over IP or short VoIP. One special aspect of Voice over IP transmission is conducting such a transmission over a wireless communication link, such as a WLAN. In every network where there are many network stations which can access the transmission medium at their discretion, i.e. where there is random access to the medium, there is contention for this medium. This contention can be resolved using a scheme such as CDMA.

This can pose problems when in a wireless network such as WLAN there are many transmissions which require a certain quality of service (QoS). Voice over IP is an example for such a transmission type, as it requires a fast transmission of the voice data packets in order to create understandable voice signals at the receiving devices. If, in addition, there are some devices in the wireless network which have to handle many such Voice over IP communication links, those devices may not be able to satisfy the quality of service requirements, while other devices which do not have to handle as many Voice over IP transmissions will still easily satisfy those requirements.

In this context transmission means one or more packets which are to be sent by a device. In a network environment several transmissions by different devices may belong to a single data transfer or VoIP connection from one device to another which is forwarded by intermediate devices. Those transmissions are however regarded independently from each other.

The object of this invention is to provide a solution to the above mentioned problem.

This object is achieved by a method according to claim 1, an apparatus according to claim 12 and a network according to claim 17.

In this method a packet loss ratio is determined for at least one transmission and a priority is set for this transmission based upon the determined packet loss ratio.

In this way, a transmission which requires a certain quality of service can be given a higher priority than other transmissions in the same network. When the transmission is prioritized, its packet loss ratio can be expected to drop and quality of service requirements may be met again.

Preferably the transmissions are conducted using a wireless communications standard. Such standards are e.g. WLAN, GSM, UMTS or derivatives or successors of these. The priority which is set according to the invention is a value or set of values that determines the chance of a transmission being conducted, that is the chance of a device of accessing the wireless communications medium for a transmission.

In a preferred embodiment of the invention the priority for the transmission is set by setting the priority for an apparatus, i.e. a network node, which conducts the transmission. With an increased priority the node will be able to access the transmission medium with a higher frequency, i.e. it will have a higher chance of gaining access. Given this higher chance the packet loss ratio for transmissions of this device can be expected to drop. The device will therefore be able to handle more transmissions with a given quality of service requirement.

When the priority for one node is increased other nodes in the wireless network will accordingly have a lower chance of access to the medium. When those other modes do not have to handle as many transmissions they will still be able to satisfy the quality of service requirements.

Preferably the packet loss ratio is determined using a packet delivery counter. Such a counter may be implemented in software or hardware. It is the task of this counter to determine a packet loss ratio; however the counter may do this in any way, e.g. by counting delivered packets, counting lost packets or directly by determining a ratio of the two values. The packet loss ratio itself may be a ratio of packets lost or an absolute number of packets lost. It may also be any other value that can be used to determine if a transmission does not satisfy QoS requirements. In addition, the packet loss ratio may not only reflect lost packets. Packets which are delivered late and thus are not useful anymore, as in a VoIP transmission, may also be considered. This may be done for example by counting such packets as lost packets.

According to an embodiment of the invention an internal packet delivery ratio counter which is implemented in WLAN devices is used as the packet delivery counter. Thus current WLAN devices can be used without any change to determine a packet loss ratio. Alternatively, a retry counter may be used to determine the packet loss ratio.

When the packet loss ratio at least reaches a first threshold for at least a first time span the priority is increased.

When the packet loss ratio falls to at least a second threshold for at least a second time span the priority is decreased.

In effect, through the use of the threshold values and the time span values, a hysteresis for the priority increase and decrease may be created. This may be done in order to prevent network instability which may occur if priorities are changed too rapidly.

In a preferred embodiment of the invention the priority is set by adjusting transmission control values. These transmission control values may affect the priority of a transmission or of the node which conducts the transmission. In case the priority of the node is changed, the transmission control values affect the node's chance to access the wireless medium. Preferably a contention window and a backoff time are used as transmission control values, as these are implemented in WLAN networks and devices.

The invention is especially useful if the transmissions or at least part of the transmissions require a certain quality of service. An example for such a transmission type is Voice over IP. However, other transmission types may also benefit from the invention, especially those which require packets to be delivered within a certain time. Such transmissions are e.g. voice and/or video transmissions, such as video conferences.

The apparatus for wireless packet oriented transmission of data has means arranged to determine a packet loss ratio for at least one transmission and means to set a priority for said transmission based upon said packet loss ratio.

The invention is especially useful in an apparatus that works as a gateway, as such a gateway usually has to handle many transmissions. In networks such as ad-hoc networks, however, every device may be required to forward transmissions to other devices and as such every device may be required to handle many transmissions at a time. Therefore, it is useful to implement the invention on any node in a network.

The network for wireless packet oriented transmission of data comprises at least two devices that are arranged to communicate in a wireless fashion, at least one of which is arranged according to the invention.

The network may be an ad hoc wireless network or alternatively an infrastructure wireless network. Alternatively it may be a combination of those two or a successor or derivative of these types. The network may also contain a node or nodes which feature a wired connection, such as a gateway to the internet or other LANs.

Exemplary embodiments of the invention are explained in more detail below with reference to drawings. The figures show:

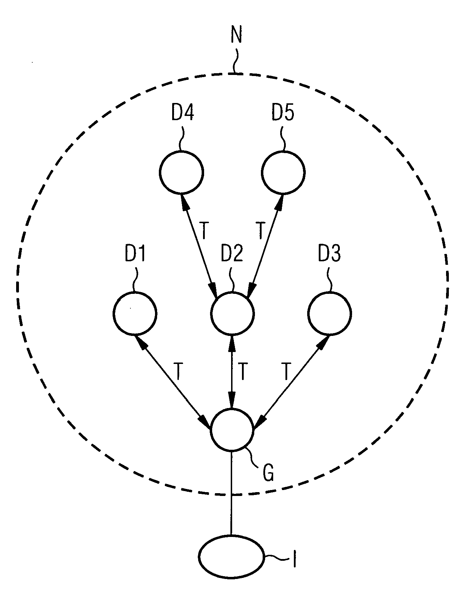

Figure 1 an abstracted network containing the internet, a gateway and five network devices.

The wireless network N according to fig. 1 is a WLAN ad-hoc network. It contains five devices D1...5, in this case telephones, which are able to communicate with each other and with an additional gateway device G which is also part of the wireless network N. The gateway G additionally interfaces to the internet I via a wired communications link.

In this network N there are several transmissions T happening at one time. In this example the transmissions T are Voice over IP communications. In this case all these transmissions T have an end point which is outside the network N so every one of these transmissions has to be forwarded to the gateway and from there on to the internet.

In this example the first and third to fifth device D1, D3...5 only have to handle their own respective transmissions T.

The second device D2, however, has to handle its own transmission T while at the same time having to forward the transmissions T of the fourth and fifth device D4, D5. While for its own transmission T, the second device D2 only has to gain access to the medium once, it has to gain access twice for each forwarded transmission T, as VoIP transmissions T deliver packets in both directions. Therefore the second device D2 has to gain access to the medium five times as often as the first and third to fifth device D1, D3...5.

The gateway G does not have to handle its own transmission T. However, it has to forward any of the other transmissions T to and from the internet I. Since the connection to the internet I is wired, it has to gain access to the medium only once for each transmission T. In this way it has to gain access to the medium five times as often as the first and third to fifth device D1, D3...5, just as the second device D2.

In a Voice over IP transmission T, packets become useless if they cannot be delivered within a certain time frame. As long as this does not happen for the gateway G and the second device D2 there is no need to adjust any priorities.

When packet losses start to occur with these two devices D2, G, according to the invention the transmission priority of the respective device D2, G is increased. As the respective node gains access to the medium more frequently with the raised priority packet losses should decrease and the overall quality of service should increase.

In this embodiment of the invention the priority increase is achieved by changing the values of a contention window and a backoff time, both of which control the medium access in a WLAN network. In this example the increase is carried out as soon as packet losses occur for more than 1% of the packets for longer than a span of one second.

When for a certain time span, in this example also one second, no packet losses occur anymore the priority for the respective device will be decreased again. In this way an optimal priority is reached for any device which has to handle many transmissions at a time.

As this method is implemented in every device D1...5 in the network N, the priorities for the second device D2 and the gateway G are probably the first to be increased. This will give those two devices D2, G a higher chance of access to the medium and thus enable them to provide the transmissions with the necessary QoS. The other devices D1, D3...5 will therefore experience a reduced chance of medium access. Since they only have to handle their own transmissions T, this will not influence the QoS negatively.

The priority setting that is achieved with embodiments of the invention is usually asymmetrical. This means that in a two-way connection between two nodes such as VoIP where there is packet traffic in both directions, one of the nodes may have a different chance of medium access than the other node(s). In the given example, if there were an additional VoIP connection between the second and the fourth device D2, D4 then the fourth device D4 would have to handle two transmissions T, while the second device D2 would have to handle a total of six transmissions T. This would probably lead to a higher priority for the second device D2 than for the fourth device D4.

Additionally, since transmissions by different devices are treated independently from each other, a VoIP packet may experience several different priorities along its way from sender to receiver. This also means that the transmissions for the two directions of a VoIP connection may experience different priorities.

## Claims

1. A method for wireless packet oriented transmission (T) of data, wherein a packet loss ratio is determined for at least one transmission and a priority is set for said transmission (T) based upon said packet loss ratio.

2. A method according to claim 1, whereby the wireless transmission (T) is conducted using a wireless communications standard such as WLAN or a derivative thereof.

3. A method according to claim 1 or 2, wherein the priority determines the chance of access to the medium of the wireless communication.

4. A method according to any of the previous claims, where the priority for the transmission is set by setting the priority for a device (D1...5, G) that conducts the transmission.

5. A method according to any of the previous claims, whereby the packet loss ratio is determined using a packet delivery counter.

6. A method according to any of the previous claims, whereby said priority of said transmission (T) is increased when the packet loss ratio at least reaches a first threshold for at least a first time span.

7. A method according to any of the previous claims, whereby said priority of said transmission (T) is decreased when the packet loss ratio falls to at least a second threshold for at least a second time span.

8. A method according to any of the previous claims, whereby said priority is set by adjusting transmission control values.

9. A method according to claim 8, where said control values are a contention window and a backoff time.

10. A method according to any of the previous claims, wherein at least two of said transmissions (T) are used to transmit data of at least one VoIP (Voice over IP) channel.

11. Apparatus (D1...5, G) for wireless packet oriented transmission of data according to any of the previous claims comprising means arranged to determine a packet loss ratio for at least one transmission and set a priority for said transmission based upon said packet loss ratio.

12. Apparatus according to claim 11, wherein the apparatus is a gateway (G).

13. Apparatus according to claim 11 or 12, wherein the apparatus is further adapted to forward transmissions (T).

14. Network for wireless packet oriented transmission (T) of data comprising at least two apparatuses (D1...5, G) according to any of the claims 11 to 13.

15. Network (N) according to claim 14, wherein the network (N) is an ad-hoc wireless network or an infrastructure wireless network.

16. Network (N) according to claim 14 or 15, wherein the priorities for different apparatuses (D1...5, G) are set asymmetrically.
